# EUROPÄISCHE PATENTSCHRIFT

(11) **EP 1 781 752 B1**
(45) Veröffentlichungstag und Bekanntmachung des Hinweises auf die Patenterteilung: **26.09.2012**
(21) Anmeldenummer: 05775925.0
(22) Anmeldetag: 02.08.2005
(51) Int. Cl.: C09K 5/06, F28D 20/02, C04B 20/10, B01J 13/00

(54) **GROBTEILIGE MIKROKAPSELZUBEREITUNG**
COARSE-PARTICLE MICROCAPSULE PREPARATION
PREPARATION DE MICROCAPSULES A GROSSES PARTICULES

(30) Priorität: 10.08.2004 EP 04018933
(43) Veröffentlichungstag der Anmeldung: 09.05.2007
(73) Patentinhaber: BASF SE, 67056 Ludwigshafen (DE)
(72) Erfinder: LANG-WITTKOWSKI, Gabriele, 68167 Mannheim (DE); JAHNS, Ekkehard, 69469 Weinheim (DE); SCHMIDT, Marco, 67346 Speyer (DE); SENGE, Michael, 32657 Lemgo (DE); STEFFEN, Markus, 67487 Maikammer (DE); KOLTER, Karl, 67117 Limburgerhof (DE)
(86) Internationale Anmeldenummer: PCT/EP2005/008354
(87) Internationale Veröffentlichungsnummer: WO 2006/018130

(56) Entgegenhaltungen:
- DE-A- 10 139 171
- DE-A- 19 749 731
- GB-A- 870 476
- US-A- 5 709 945
- US-A- 5 804 297
- US-B2- 6 703 127

## Beschreibung

Die vorliegende Erfindung betrifft eine grobteilige Mikrokapselzubereitung enthaltend mikroverkapselte Latentwärmespeicher und ein oder mehrere polymere Bindemittel sowie Verfahren zu ihrer Herstellung und ihre Verwendung in Wärmetauschern und Baustoffen.

In den letzten Jahren sind als neue Materialkombination Baustoffe mit Latentwärmespeichern untersucht worden. Ihre Funktionsweise beruht auf der beim fest/flüssig-Phasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden. Da die Latentwärmespeichermaterialien je nach Temperatur auch flüssig vorliegen, können sie nicht direkt mit Baustoffen verarbeitet werden, denn Emissionen an die Raumluft sowie die Trennung vom Baustoff wären zu befürchten.

Die EP-A-1 029 018 lehrt die Verwendung von Mikrokapseln mit einer Kapselwand aus einem hochvernetzten Methacrylsäureesterpolymer und einem Latentwärmespeicherkern in Bindebaustoffen wie Beton oder Gips. Da die Kapselwände nur eine Dicke im Bereich von 5 bis 500 nm haben, sind sie jedoch sehr druckempfindlich, ein Effekt der bei ihrer Verwendung in Durchschreibepapieren genutzt wird. Das schränkt jedoch ihre Verwendbarkeit ein.

Die DE-A-101 39 171 beschreibt die Verwendung von mikroverkapselten Latentwärmespeichermaterialien in Gipskartonplatten. Ferner lehrt die ältere US-Anmeldung Ser. No 60/573420 den Einsatz von mikroverkapselten Latentwärmespeichermaterialien in Spanplatten zusammen mit Melaminformaldehydharzen als Bindemittel.

Bei allen diesen verschiedenen Anwendungen werden die Mikrokapseln als Pulver mit Teilchengrößen im Bereich von 1 bis 50 µm eingesetzt. Pulver lassen sich jedoch oftmals schlecht verarbeiten. Die Folge sind Formulierungen mit einem hohen Bindemittelgehalt. Betrachtet man in den oben geschilderten Schriften das Verhältnis von Mikrokapseln zu Bindemittel gerechnet als Feststoff bezogen auf ihre Summe, so reicht der Mikrokapselanteil bis maximal 30 Gew.-% und der Bindemittelanteil beträgt 70 Gew.-% und mehr. Eine Optimierung durch Vergrößerung des Latentwärmespeicheranteils, der ja dem Mikrokapselanteil entspricht, war daher wünschenswert.

Die JP 2001098259 beschreibt das Vermischen von mikroverkapseltem Latentwärmespeichermaterial mit Wasser und Zement und Zerkleinern des ausgehärteten Materials auf Teilchengrößen > 1 mm. Derartige Teilchen werden als Schüttungen in Wänden und Fußböden eingesetzt.

Die JP 2001303032 lehrt ein Mikrokapselextrudat aus einem Silikagelpigment und einer Mikrokapseldispersion, deren Mikrokapseln einen Kapselkern aus Latentwärmespeichermaterial haben.

Die US 6703 127 lehrt Makroteilchen, die gebildet werden, indem man mikroverkapseltes Latentwärmespeichermaterial in einer Lösung eines Verdickers suspendiert und durch Eintropfen in eine Vernetzerlösung die Tropfen aushärtet. Derart ausgehärtete Tropfen haben deutlich schlechtere anwendungstechnische Eigenschaften.

Die GB 870 476 beschreibt Makrokapsel enthaltend Mikrokapseln mit einem filmbildenden Wandmaterial wie Gelatine, die durch eine Kapselwand aus einem solchen filmbildenden Polymer zu Clustern zusammengehalten werden. Derartige Makrokapseln haben viel schlechtere anwendungstechnische Eigenschaften, da sie zum Quellen neigen und empfindlich gegenüber Bakterien sind.

Die DE-A-102 00 316 lehrt die Herstellung von Kunststoffspritzteilen aus Kunststoffgranulat, dem vor der Einspritzung in den Formhohlraum Trägermaterialteile mit Latentwärmespeichern zugesetzt werden. Die Kapillarräume der mineralischen Trägermaterialien haben eine saugfähige Feststoffstruktur, in der die Latentwärmespeichermaterialien gehalten werden. Kapillarräume im Trägermaterial sind jedoch letztlich offene Systeme, so dass immer bei Temperaturerhöhungen, wenn die Latentwärmespeicher in die flüssige Phase wechseln, mit Austritt von flüssigem Wachs zu rechnen ist.

Die DE-A-100 58 101 beschreibt Latentwärmespeicherkörper mit einem äußeren Schalenkörper aus Hartkunststoff wie Polymethylmethacrylat und einer Füllung aus Latentwärmespeichermaterial. Diese Körper werden mittels eines Zweikomponentenspritzverfahrens hergestellt. Das Latentwärmespeichermaterial ist dabei durch Zusatz von Blockcopolymeren gelartig verfestigt. Auf diese Weise können durch abschließendes Walzen des Körpers große Wärmespeicherplatten hergestellt werden. Hier, wie auch in der DE-A-102 00 316, werden die Latentwärmespeichermaterialien direkt verarbeitet und eine Stabilisierung über die Wachszusätze erzielt.

Die DE-A-100 48 536 schließlich lehrt einen dynamischen Latentwärmespeicher mit einem gelartig verdickten Latentwärmespeichermaterial, zwischen dessen kleinen Teilchen ein Wärmeträger strömt. Das Funktionsprinzip beruht darauf, dass die Wärmeträgerflüssigkeit verdampft und bei Kontakt mit dem Latentwärmespeicher kondensiert und die Energie an ihn abgibt. Problematisch ist jedoch, dass die Teilchen durch Wärmezufuhr weich werden und die Strömungswege verengt werden.

Die Verwendung von gelartig verfestigten Latentwärmespeichermaterialien sowie einer zusätzlichen Stützstruktur hat überdies zur Folge, dass der Anteil des Latentwärmespeichermaterials bezogen auf das Gesamtgewicht der Zubereitung unter 60 Gew.-% liegt.

Die WO 200224789 ist mit Polymerblends aus Polyethylen befasst, die durch Vermischen von geschmolzenem Polyethylen mit mikroverkapselten Latentwärmespeichern und anschließendem Zerkleinern erhalten werden und in einem zweiten Verarbeitungsschritt mit Polypropylen zusammen extrudiert werden. Derartig erhaltene Pellets haben jedoch einen sehr geringen Latentwärmespeicheranteil, so dass die Wärmespeicherkapazität nur gering ist.

Daher war es ein Aspekt der vorliegenden Erfindung eine Latentwärmespeicherzubereitung zu finden, deren Anteil an Latentwärmespeichermaterial hoch ist und sie damit eine hohe Speicherenergie und einen hohen Wirkungsgrad besitzt.

Ferner sollte die Latentwärmespeicherzubereitung sich vorteilhaft in Wärmetauschern und in offenen Systemen, wie für zentrale und dezentrale Lüftung, einsetzen lassen.

Dem gemäß wurde eine grobteilige Mikrokapselzubereitung gefunden mit Teilchen, deren Teilchengrößen im Bereich von 200 µm bis 5 cm liegen, enthaltend Mikrokapseln mit einem Kapselkern aus Latentwärmespeichermaterial und einem duroplastischen Polymer als Kapselwand und ein oder mehrere polymere Bindemittel, deren Bindemittelpolymer eine Glasübertragungstemperatur von -60 bis +150 °C und thermoptastische und unter Verarbeitungsbedingungen filmbildende Eigenschaften hat und aus einem oder mehreren ethylenisch ungesättigten Monomeren M durch wässrige Emulsionspolymerisation aufgebaut wird, wobei der Bindemittelgehalt gerechnet als Feststoff 1 - 30 Gew.-% bezogen auf das Gesamtgewicht der grobteiligen Mikrokapselzubereitung beträgt sowie Verfahren zu ihrer Herstellung und ihre Verwendung in Wärmetauschern und Baustoffen.

Unter grobteilig sind im Rahmen der vorliegenden Erfindung Teilchen zu verstehen, deren Abmessungen sich im Bereich von 200 µm bis 5 cm, bevorzugt 500 µm bis 2 cm bewegen. Diese Teilchen können dabei eine amorphe, kugelartige bis hin zu einer stäbchenförmigen Gestalt haben, abhängig von der jeweiligen Herstellungsmethode. In Fällen von kugelartigen Gebilden beträgt der mittlere Durchmesser 200 µm bis 2 cm, vorzugsweise 500 µm bis 1 cm. Stäbchenartige Formen haben in ihrer längsten Ausdehnung einen Wert von höchstens 5 cm, in der Regel im Bereich von 1 mm bis 2 cm. Die kürzeste Ausdehnung hat einen Wert von mindestens 200 µm, in der Regel von 500 µm bis 5 mm. Bei den stäbchenartigen Teilchen wird das Verhältnis von Länge zu Durchmesser üblicherweise den Wert von 10 : 1, vorzugsweise den Wert 5 : 1 nicht überschreiten.

In den bevorzugten erfindungsgemäßen Mikrokapselzubereitungen sind 90 Gew.-% der Teilchen > 500 µm, vorzugsweise >700 µm insbesondere >1mm, bestimmt durch Siebtechnik.

Die erfindungsgemäßen Teilchen sind asymmetrische Aggregate aus Pulverpartikeln, die die Form einer Kugel, eines Stäbchen, eines Zylinders nur ungefähr aufweisen und deren Oberfläche oftmals uneben und zackig ist. Solche Teilchen werden oftmals auch als Granulat oder Agglomerat bezeichnet. Eine andere Form der Agglomerate sind Presslinge sogenannte Pellets oder Tabletten, wie sie von der Arzneimittelherstellung her bekannt sind.

Die erfindungsgemäßen grobteiligen Zubereitungen bestehen zu mindestens 90 Gew.-% überwiegend aus Mikrokapseln und polymerem Bindemitteln. Bevorzugt beträgt der Bindemittelgehalt, gerechnet als Feststoff, 1 - 40 Gew.-%, bevorzugt 1 - 30 Gew.-%, besonders bevorzugt 1 - 25 Gew.-%, insbesondere 1 - 20 Gew.-% und ganz besonders bevorzugt 2 - 15 Gew.-% bezogen auf das Gesamtgewicht der grobteiligen Zubereitung.

Bevorzugte Zubereitungen enthalten bezogen auf ihr Gesamtgewicht 55-94 Gew.-% Latentwärmespeichermaterial, 1 - 30 Gew.-% polymeres Bindemittel gerechnet als Feststoff, Mikrokapselwandmaterial sowie 0 - 10 Gew.-% sonstige Zusatzstoffe.

Besonders bevorzugt werden Zubereitungen, insbesondere Granulate, aus 85 - 99 Gew.-% mikroverkapselten Latentwärmespeichern, 1 - 15 Gew.-% polymerem Bindemittel gerechnet als Feststoff und 0 - 5 Gew.-% sonstigen Zusatzstoffen.

Da die grobteiligen Mikrokapselzubereitungen meist unter Verarbeitung mit Wasser oder wässrigen Stoffen hergestellt werden, können die Zubereitungen noch Reste von Wasser enthalten. Die Menge an Restfeuchte beträgt üblicherweise von 0 bis etwa 2 Gew.-% bezogen auf das Gesamtgewicht.

Die in der Zubereitung enthaltenen Mikrokapseln sind Teilchen mit einem Kapselkern bestehend überwiegend, zu mehr als 95 Gew.-%, aus Latentwärmespeichermaterialien und einem Polymer als Kapselwand. Der Kapselkern ist dabei abhängig von der Temperatur fest oder flüssig. Die mittlere Teilchengröße der Kapseln (Z-Mittel mittels Lichtstreuung) beträgt 0,5 bis 100 µm, bevorzugt 1 bis 80 µm insbesondere 1 bis 50 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 93:7.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weisen die Latentwärmespeichermaterialien einen fest/flüssig Phasenübergang im Temperaturbereich von -20 bis 120°C auf. In der Regel handelt es sich bei dem Latentwärmespeichermaterial um eine organische, bevorzugt lipophile Substanz.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den kapselkern-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicher gewünscht sind, werden die Latentwärmespeichermaterialien gewählt. Beispielsweise verwendet man für Wärmespeicher in Baustoffen in gemäßigtem Klima bevorzugt Latentwärmespeichermaterialien, deren fest/flüssig-Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Bei Solaranwendungen als Speichermedium oder zur Überhitzungsvermeidung von transparenter Wärmedämmung, wie in der EP-A-333 145 beschrieben, sind vor allem Umwandlungstemperaturen von 30-60°C geeignet.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Als Polymer für die Kapselwand können prinzipiell die für die Mikrokapseln für Durchschreibepapiere bekannten Materialien verwendet werden. So ist es beispielsweise möglich, die Latentwärmespeichermaterialien nach den in der GB-A 870476, US 2,800,457, US 3,041,289 beschriebenen Verfahren in Gelatine mit anderen Polymeren zu verkapseln.

Bevorzugte Wandmaterialien für die Kapselwand der Mikrokapseln, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise hochvernetzte Formaldehydharze, hochvernetzte Polyharnstoffe und hochvernetzte Polyurethane sowie hochvernetzte Acryl- und Methacrylsäureesterpolymere.

Unter Formaldehydharzen versteht man Reaktionsprodukte aus Formaldehyd mit
- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,
oder ihren Mischungen.

Als Kapselwandmaterial bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkyl- insbesondere Methylether dieser Formaldehydharze sowie die Mischungen mit diesen Formaldehydharzen. Insbesondere werden Melamin-Formaldehyd-Harze und/oder deren Methylether bevorzugt.

In den von den Durchschreibepapieren her bekannten Verfahren werden die Harze als Prepolymere eingesetzt. Das Prepolymer ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A-562 344 und EP-A-974 394 beschrieben.

Kapselwände aus Polyharnstoffen und Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4,021,595, EP-A 0 392 876 und EP-A 0 535 384 bekannt.

Bevorzugt werden Mikrokapseln, deren Kapselwand ein hochvernetztes Methacrylsäureesterpolymer ist. Der Vernetzungsgrad wird dabei mit einem Vernetzeranteil ≥ 10 Gew.-% bezogen auf das Gesamtpolymer erzielt.

In den bevorzugten Mikrokapseln sind die Wand-bildenden Polymere aus 10 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Polymere bis zu 80 Gew.-%, vorzugsweise 5 bis 60 Gew.-%, insbesondere 10 bis 50 Gew.-%, eines bi- oder polyfunktionellen Monomers als Monomere II, welches in Wasser nicht löslich oder schwer löslich ist, einpolymerisiert enthalten. Daneben können die Polymere bis zu 90 Gew.-%, vorzugsweise bis zu 50 Gew.-%, insbesondere bis zu 30 Gew.-% sonstige Monomere III einpolymerisiert enthalten.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens 2 nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol - und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Nach einer weiteren bevorzugten Ausführungsform sind die Wand-bildenden Polymere aus 30 bis 90 Gew.-% Methacrylsäure, 10 bis 70 Gew.-% eines Alkylesters der (Meth)acrylsäure, bevorzugt Methylmethacrylat, tert-Butylmethacrylat, Phenylmethacrylat und Cyclohexylmethacrylat, und 0 bis 40 Gew.-% weitere ethylenisch ungesättigter Monomeren gebildet. Diese weiteren ethylenisch ungesättigten Monomere können die für diese Ausführungsform bisher nicht erwähnten Monomere I, II oder III sein. Da sie in der Regel keinen wesentlichen Einfluss auf die gebildeten Mikrokapseln dieser Ausführungsform haben, ist ihr Anteil bevorzugt < 20 Gew.-% insbesondere <10 Gew.-%. Derartige Mikrokapseln sowie ihre Herstellung werden in der EP-A-1 251 954 beschrieben, auf die ausdrücklich Bezug genommen wird.

Die zur erfindungsgemäßen Verwendung geeigneten Mikrokapseln lassen sich durch eine sogenannte in-situ-Polymerisation herstellen.

Die bevorzugten Mikrokapseln sowie ihre Herstellung sind aus der EP-A-457 154, DE-A-10 139 171, DE-A-102 30 581 und EP-A-1 321 182 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Anschließend löst man die Polymerisation der Monomeren durch Erwärmung aus und steuert sie durch weitere Temperaturerhöhung, wobei die entstehenden Polymere die Kapselwand bilden, welche die lipophile Substanz umschließt.

In der Regel führt man die Polymerisation bei 20 bis 100°C, vorzugsweise bei 40 bis 80°C durch. Natürlich sollte die Dispersions- und Polymerisationstemperatur oberhalb der Schmelztemperatur der lipophilen Substanzen liegen.

Nach Erreichen der Endtemperatur setzt man die Polymerisation zweckmäßigerweise noch etwa für eine Zeit von bis zu 2 Stunden fort, um Restmonomergehalte abzusenken. Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 9924525 beschrieben, vorteilhaft durch redoxinitiierte Polymerisation, wie in der DE-A 4 435 423, DE-A 4419518 und DE-A 4435422 beschrieben.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen zwischen 1 und 30 µm, vorzugsweise 3 und 12 µm, ausbilden.

In der Regel werden die Mikrokapseln in Gegenwart wenigstens eines organischen Schutzkolloids hergestellt, das sowohl anionisch als auch neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden oder nichtionische Schutzkolloide.

Organische neutrale Schutzkolloide sind Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate sowie Methylhydroxypropylcellulose.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen und nichtionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Die Wirkweise und ihr Einsatz ist in der EP-A 1 029 018 sowie der EP-A 1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A 1 029 018, sowie der EP-A 1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben.

Die durch die Polymerisation erhaltenen Mikrokapseldispersionen ergeben bei Sprühtrocknung ein gut rieselfähiges Kapselpulver. Die Sprühtrocknung der Mikrokapseldispersion kann in üblicher Weise erfolgen. Im allgemeinen wird so vorgegangen, dass die Eingangstemperatur des Warmluftstroms im Bereich von 100 bis 200°C, vorzugsweise 120 bis 160°C, und die Ausgangstemperatur des Warmluftstroms im Bereich von 30 bis 90°C, vorzugsweise 60 bis 80°C liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung des Polymerisatpulvers erfolgt normalerweise unter Verwendung von Zyklonen oder Filterabscheidern. Die versprühte wässrige Polymerisatdispersion und der Warmluftstrom werden vorzugsweise parallel geführt.

Gegebenenfalls setzt man zur Sprühtrocknung Sprühhilfsmittel zu, um die Sprühtrocknung zu erleichtern, oder bestimmte Pulvereigenschaften einzustellen, z.B. Staubarmut, Rieselfähigkeit oder verbesserte Redispergierbarkeit. Dem Fachmann sind eine Vielzahl von Sprühhilfsmitteln geläufig. Beispiele hierfür finden sich in DE-A 196 29 525, DE-A 196 29 526, DE-A 22 14 410, DE-A 24 45 813, EP-A 407 889 oder EP-A 784 449. Vorteilhafte Sprühhilfsmittel sind beispielsweise wasserlösliche Polymere vom Typ Polyvinylalkohol oder teilhydrolysierte Polyvinylacetate, Cellulosederivate wie Hydroxyethylcellulose, Carboxymethylcellulose, Methylcellulose, Methylhydroxyethylcellulose und Methylhydroxypropylcellulose, Polyvinylpyrrolidon, Copolymere des Vinylpyrrolidons, Gelatine, bevorzugt Polyvinylalkohol und partiell hydrolysierte Polyvinylacetate sowie Methylhydroxypropylcellulose.

Polymere Bindemittel sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der gewichtsmittlere Durchmesser der Polymerisatpartikel liegt häufig im Bereich von 10 bis 1000 nm, oft 50 bis 500 nm oder 100 bis 400 nm. Neben dem Polymerisat (Bindemittelpolymer) enthält das polymere Bindemittel die unten beschriebenen Hilfsstoffe. Die erfindungsgemäßen Bindemittelpolymere haben bevorzugt thermoplastische Eigenschaften. Unter thermoplastisch ist dabei zu verstehen, dass die Bindemittelpolymere ohne Zersetzung oberhalb der Glasübergangstemperatur erweichen.

Erfindungsgemäß können als polymere Bindemittel grundsätzlich alle feinteiligen Polymerisate (Bindemittelpolymere) eingesetzt werden, die bei der Verarbeitungstemperatur in der Lage sind, einen Polymerfilm zu bilden, d.h. bei diesen Temperaturen filmbildend sind. Nach einer bevorzugten Variante sind die Polymerisate nicht wasserlöslich. Dies ermöglicht eine Verwendung der erfindungsgemäßen grobteiligen Zubereitungen in feuchten oder wässrigen Systemen.

Erfindungsgemäß können solche Polymerisate eingesetzt werden, deren Glasübergangstemperatur -60 bis +150°C, oft -20 bis +130°C und häufig 0 bis +120°C beträgt. Mit der Glasübergangstemperatur (T_{g}), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Ganz besonders bevorzugt werden Polymerisate mit einer Glasübergangstemperatur im Bereich von 40 bis 120°C. In der Regel werden diese bei Temperaturen im Bereich von 20 bis 120°C verarbeitet. Derart erhaltene grobteilige Zusammensetzungen zeigen besonders gute mechanische Stabilität und haben gute Abriebwerte.

Die Glasübergangstemperatur von Polymerisaten, die aus ethylenisch ungesättigten Monomeren aufgebaut sind, kann in bekannter Weise über die Monomerzusammensetzung gesteuert werden (T.G. Fox, Bull. Am. Phys. Soc. (Ser. II) 1, 123 [1956] und Ullmanns Enzyklopedia of Industrial Chemistry 5. Aufl., Vol. A21, Weinheim (1989) S. 169).

Bevorzugte Polymerisate sind aus ethylenisch ungesättigten Monomeren M aufgebaut, die in der Regel wenigstens 80 Gew.-%, insbesondere wenigstens 90 Gew.-%, ethylenisch ungesättigte Monomere A die ausgewählt sind unter Monomeren mit einer Wasserlöslichkeit < 10 g/l (25°C und 1 bar) und deren Mischungen mit Acrylnitril und/oder Methacrylnitril, wobei der Anteil an Acrylnitril und Methacrylnitril in der Regel 30 Gew.-% nicht überschreitet und z.B. 1 bis 30 Gew.-% oder 5 bis 25 Gew.-% der Monomere A beträgt. Daneben enthalten die Polymere noch 0,5 bis 20 Gew.-% von den Monomeren A verschiedene Monomere B. Hier und im Folgenden sind alle Mengenangaben für Monomere in Gew.-% auf 100 Gew.-% Monomere M bezogen.

Monomere A sind in der Regel einfach ethylenisch ungesättigt oder konjugierte Diolefine. Beispiele für Monomere A sind:
- Ester einer α,β-ethylenisch ungesättigten C₃-C₆-Monocarbonsäure oder C₄-C₈-Dicarbonsäure mit einem C₁-C₁₀-Alkanol. Vorzugsweise handelt es sich dabei um Ester der Acrylsäure oder Methacrylsäure, wie Methyl(meth)acrylat, Ethyl(meth)acrylat, n-Butyl(meth)acrylat, t-Butyl(meth)acrylat, 2-Ethylhexyl(meth)acrylat etc.;
- vinylaromatische Verbindungen, wie Styrol, 4-Chlorstyrol, 2-Methylstyrol etc.;
- Vinylester aliphatischer Carbonsäuren mit vorzugsweise 1 bis 10 C-Atomen, wie Vinylacetat, Vinylpropiat, Vinyllaurat, Vinylstearat, Versaticsäurevinylester etc.;
- Olefinen, wie Ethylen oder Propylen;
- konjugierten Diolefinen, wie Butadien oder Isopren;
- Vinylchlorid oder Vinylidenchlorid.

Bevorzugte filmbildende Polymerisate sind ausgewählt unter den nachfolgend aufgeführten Polymerklassen I bis IV:
I) Copolymerisate von Styrol mit Alkyl(acrylaten), d.h. Copolymerisate, die als Monomer A Styrol und wenigstens einen C₁-C₁₀-Alkylester der Acrylsäure und gegebenenfalls einen oder mehrere C₁-C₁₀-Alkylester der Methacrylsäure einpolymerisiert enthalten;
II) Copolymerisate des Styrols mit Butadien, d.h. Copolymerisate die als Monomer A Styrol und Butadien sowie gegebenenfalls (Meth)acrylsäureester von C₁-C₈-Alkanolen, Acrylnitril und/oder Methacrylnitril einpolymerisiert enthalten;
III) Homo- und Copolymerisate von Alkyl(meth)acrylaten (Reinacrylate), d.h. Homo - und Copolymerisate, die als Monomere A wenigstens einen C₁-C₁₀-Alkylester der Acrylsäure und/oder einen C₁-C₁₀-Alkylester der Methacrylsäure einpolymerisiert enthalten, insbesondere Copolymere, die als Monomere A Methylmethacrylat, wenigstens einen C₁-C₁₀-Alkylester der Acrylsäure und gegebenenfalls einen C₂-C₁₀-Alkylester der Methacrylsäure einpolymerisiert enthalten;
IV) Homopolymerisate von Vinylestern aliphatischer Carbonsäuren und Copolymerisate von Vinylestern aliphatischer Carbonsäuren mit Olefinen und/oder Alkyl(meth)acrylaten, d.h. Homo- und Copolymerisate, die als Monomer A wenigstens einen Vinylester einer aliphatischen Carbonsäure mit 2 bis 10 C-Atomen und gegebenenfalls ein oder mehrere C₂-C₆-Olefine und/oder gegebenenfalls einen oder mehrere C₁-C₁₀-Alkylester der Acrylsäure und/oder der Methacrylsäure einpolymerisiert enthalten;
V) Copolymerisate von Styrol mit Acrylnitril.

Typische C₁-C₁₀-Alkylester der Acrylsäure in den Copolymerisaten der Klasse I bis IV sind Ethylacrylat, n-Butylacrylat, tert.-Butylacrylat, n-Hexylacrylat und 2-Ethylhexyl acrylat.

Typische Copolymerisate der Klasse I enthalten als Monomere A 20 bis 80 Gew.-% und insbesondere 30 bis 70 Gew.-% Styrol und 20 bis 80 Gew.-%, insbesondere 30 bis 70 Gew.-%, wenigstens eines C₁-C₁₀-Alkylesters der Acrylsäure wie n-Butylacrylat, Ethylacrylat oder 2-Ethylhexylacrylat, jeweils bezogen auf die Gesamtmenge der Monomere A.

Typische Copolymerisate der Klasse II enthalten als Monomere A, jeweils bezogen auf die Gesamtmenge der Monomere A, 30 bis 85 Gew.-%, vorzugsweise 40 bis 80 Gew.-% und besonders bevorzugt 50 bis 75 Gew.-% Styrol und 15 bis 70 Gew.-%, vorzugsweise 20 bis 60 Gew.-% und besonders bevorzugt 25 bis 50 Gew.-% Butadien, wobei 5 bis 20 Gew.-% der vorgenannten Monomere A durch (Meth)acrylsäureester von C₁-C₈-Alkanolen und/oder durch Acrylnitril oder Methacrylnitril ersetzt sein können.

Typische Copolymerisate der Klasse III enthalten als Monomere A, jeweils bezogen auf die Gesamtmenge der Monomere A, 20 bis 80 Gew.-%, vorzugsweise 30 bis 70 Gew.-% Methylmethacrylat und mindestens ein weiteres, vorzugsweise ein oder zwei weitere Monomere, ausgewählt unter Acrylsäureestern von C₁-C₁₀-Alkanolen, insbesondere n-Butylacrylat, 2-Ethylhexylacrylat und Ethylacrylat und gegebenenfalls einen Methacrylsäureester eines C₂-C₁₀-Alkanols in einer Gesamtmenge von 20 bis 80 Gew.-% und vorzugsweise 30 bis 70 Gew.-% einpolymerisiert.

Typische Homo- und Copolymerisate der Klasse IV enthalten als Monomere A, jeweils bezogen auf die Gesamtmenge der Monomere A, 30 bis 100 Gew.-%, vorzugsweise 40 bis 100 Gew.-% und besonders bevorzugt 50 bis 100 Gew.-% einen Vinylester einer aliphatischen Carbonsäure, insbesondere Vinylacetat und 0 bis 70 Gew.-%, vorzugsweise 0 bis 60 Gew.-% und besonders bevorzugt 0 bis 50 Gew.-% eines C₂-C₆-Olefins, insbesondere Ethylen und gegebenenfalls ein oder zwei weitere Monomere, ausgewählt unter (Meth)acrylsäure-estern von C₁-C₁₀-Alkanolen in einer Menge von 1 bis 15 Gew.-% einpolymerisiert.

Unter den vorgenannten Polymerisaten sind die Polymerisate der Klassen IV und V besonders geeignet.

Bevorzugt werden Homopolymerisate von Vinylestern aliphatischer Carbonsäuren, insbesondere von Vinylacetat. Eine spezielle Ausführungsform sind solche, die mit Schutzkolloiden wie Polyvinylpyrrolidon und anionischen Emulgatoren stabilisiert werden. Eine solche Ausführungsform wird in der WO 02/26845 beschrieben, auf die ausdrücklich Bezug genommen wird.

Als Monomere B kommen grundsätzlich alle Monomere in Betracht, die von den vorgenannten Monomeren verschieden und mit den Monomeren A copolymerisierbar sind. Derartige Monomere sind dem Fachmann bekannt und dienen in der Regel der Modifizierung der Eigenschaften des Polymerisats.

Bevorzugte Monomere B sind ausgewählt unter monoethylenisch ungesättigten Mono - und Dicarbonsäuren mit 3 bis 8 C-Atomen, insbesondere Acrylsäure, Methacrylsäure, Itaconsäure, deren Amiden wie Acrylamid und Methacrylamid, deren N-Alkylolamiden wie N-Methylolacrylamid und N-Methylolmethacrylamid, deren Hydroxy-C₁-C₄-alkyl-estern wie 2-Hydroxyethylacrylat, 2- und 3-Hydroxypropylacrylat, 4-Hydroxybutylacrylat 2-Hydroxyethylmethacrylat, 2- und 3-Hydroxypropylmethacrylat, 4-Hydroxybutylmethacrylat und monoethylenisch ungesättigten Monomeren mit Oligoalkylenoxid-Ketten vorzugsweise mit Polyethylenoxidketten mit Oligomerisierungsgraden vorzugsweise im Bereich von 2 bis 200, z.B. Monovinyl- und Monoallylether von Oligoethylenglykolen sowie Ester der Acrylsäure, der Maleinsäure oder der Methacrylsäure mit Oligoethylenglykolen.

Der Anteil der Monomere mit Säuregruppen beträgt vorzugsweise nicht mehr als 10 Gew.-% und insbesondere nicht mehr als 5 Gew.-%, z.B. 0,1 bis 5 Gew.-%, bezogen auf die Monomere M. Der Anteil an Hydroxyalkylestern und Monomeren mit Oligoalkylenoxidketten liegt, sofern enthalten, vorzugsweise im Bereich von 0,1 bis 20 Gew.-% und insbesondere im Bereich von 1 bis 10 Gew.-%, bezogen auf die Monomere M. Der Anteil der Amide und N-Alkylol-amide liegt, sofern enthalten, vorzugsweise im Bereich von 0,1 bis 5 Gew.-%.

Neben den vorgenannten Monomeren B kommen als weitere Monomere B auch vernetzende Monomere, wie Glycidylether und -ester, z.B. Vinyl-, Allyl- und Methallylglycidylether, Glycidylacrylat und -methacrylat, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z.B. Acetylacetoxyethyl(meth)acrylat in Betracht. Als Monomere B kommen weiterhin Verbindungen, die zwei nicht-konjugierte, ethylenisch ungesättigte Bindungen aufweisen, z.B. die Di- und Oligoester mehrwertiger Alkohole mit a,b-monoethylenisch ungesättigten C₃-C₁₀-Monocarbonsäuren wie Alkylenglykoldiacrylate und -dimethacrylate, z.B. Ethylenglykoldiacrylat, 1,3-Butylenglykoldiacrylat, 1,4-Butylenglykoldiacrylat, Propylenglykoldiacrylat, sowie weiterhin Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat in Betracht. Der Anteil vernetzender Monomere liegt in der Regel nicht über 1 Gew.-%, bezogen auf die Gesamtmonomermenge und wird insbesondere 0,1 Gew.-% nicht überschreiten.

Weiterhin sind als Monomere B auch Vinylsilane, z.B. Vinyltrialkoxysilane geeignet. Diese werden, sofern gewünscht, in einer Menge von 0,01 bis 1 Gew.-%, bezogen auf die Gesamtmonomermenge bei der Herstellung der Polymerisate eingesetzt.

Wässrige Polymerisatdispersionen sind insbesondere durch radikalisch initiierte wässrige Emulsionspolymerisation von ethylenisch ungesättigten Monomeren zugänglich. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man die ethylenisch ungesättigten Monomeren, häufig unter Mitverwendung von oberflächenaktiven Substanzen, in wässrigem Medium dispers verteilt und mittels wenigstens eines radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und DE-A 198 47 115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide oder schaumdämpfende Additive zugesetzt. Häufig betragen die Polymerisatfeststoffgehalte der wässrigen Polymerisatdispersionen 30 bis 80 Gew.-%, 40 bis 70 Gew.-% oder 45 bis 65 Gew.-%. Ebenso bevorzugt werden die aus den Polymerisatdispersionen hergestellten Polymerisatpulver sowie wässrige Dispersionen die durch Redispergieren der Polymerpulver in Wasser erhältlich sind. Sowohl wässrige Polymerdispersionen als auch die daraus hergestellten Pulver sind überdies kommerziell erhältlich, z.B. unter den Marken ACRONAL®, STYRONAL®, BUTOFAN®, STYROFAN® und KOLLICOAT® der BASF-Aktiengesellschaft, Ludwigshafen, Deutschland, VINNOFIL® und VINNAPAS® der Fa. Wacker Chemie-GmbH, Burghausen, und RHODIMAX® der Fa. Rhodia S.A.

Als oberflächenaktive Substanzen für die Emulsionspolymerisation kommen die üblicherweise für die Emulsionspolymerisation eingesetzten Emulgatoren und Schutzkolloide in Betracht. Bevorzugte Emulgatoren sind anionische und nichtionische Emulgatoren, die im Unterschied zu den Schutzkolloiden in der Regel ein Molekulargewicht unterhalb 2000 g/mol aufweisen und in Mengen von bis zu 0,2 bis 10 Gew.-%, vorzugsweise 0,5 bis 5 Gew.-%, bezogen auf das Polymerisat in der Dispersion bzw. auf die zu polymerisierenden Monomere M eingesetzt werden.

Derartige Schutzkolloide sind beispielhaft bereits oben für die Mikrokapselbildung genannt.

Zu den anionischen Emulgatoren zählen Alkali- und Ammoniumsalze von Alkylsulfaten (Alkylrest: C₈-C₂₀), von Schwefelsäurehalbestern ethoxylierter Alkanole (EO-Grad: 2 bis 50, Alkylrest: C₈ bis C₂₀) und ethoxylierter Alkylphenole (EO-Grad: 3 bis 50, Alkylrest: C₄-C₂₀), von Alkylsulfonsäuren (Alkylrest: C₈ bis C₂₀), von sulfonierten Mono- und Di-C₆-C₁₈-alkyldiphenylethern, wie sie in US-A-4,269,749 beschrieben werden, und von Alkylarylsulfonsäuren (Alkylrest: C₄-C₂₀). Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆), sowie Polyethylenoxid/Polypropylenoxid-Blockcopolymere. Bevorzugt werden Ethoxylate langkettiger Alkanole (Alkylrest: C₁₀-C₂₂, mittlerer Ethoxylierungsgrad: 3 bis 50) und darunter besonders bevorzugt solche auf Basis von Oxoalkoholen und nativen Alkoholen mit einem linearen oder verzweigten C₁₂-C₁₈-Alkylrest und einem Ethoxilierungsgrad von 8 bis 50.

Selbstverständlich kann das Molekulargewicht der Polymere durch Zugabe von Reglern in einer geringen Menge, in der Regel bis zu 2 Gew.-%, bezogen auf die polymerisierenden Monomere M, eingestellt werden. Als Regler kommen insbesondere organische Thioverbindungen, ferner Allylalkohole und Aldehyde in Betracht. Bei der Herstellung der Butadien-enthaltenden Polymere der Klasse I werden häufig Regler in einer Menge von 0,1 bis 2 Gew.-%, vorzugsweise organische Thioverbindungen wie tert.-Dodecylmercaptan eingesetzt.

Nach Beendigung der Polymerisation werden die verwendeten Polymerdispersionen vor ihrer erfindungsgemäßen Verwendung häufig alkalisch, vorzugsweise auf pH-Werte im Bereich von 7 bis 10 eingestellt. Zur Neutralisation können Ammoniak oder organische Amine einsetzt, sowie vorzugsweise Hydroxide, wie Natriumhydroxid, Kaliumhydroxid oder Calciumhydroxid verwendet werden.

Zur Herstellung von Polymerpulvern werden die wässrigen Polymerdispersionen in bekannter Weise einem Trocknungsverfahren, vorzugsweise in Gegenwart üblicher Trocknungshilfsmittel, unterworfen. Bevorzugtes Trocknungsverfahren ist die Sprühtrocknung. Sofern erforderlich, wird das Trocknungshilfsmittel in einer Menge von 1 bis 30 Gew.-% vorzugsweise 2 bis 20 Gew.-%, bezogen auf den Polymergehalt der zu trocknenden Dispersion eingesetzt.

Die Sprühtrocknung der zu trocknenden Polymerisatdispersionen erfolgt in der Regel wie bereits für die Mikrokapseldispersion beschrieben, oftmals in Gegenwart eines üblichen Trocknungshilfsmittels wie Homo- und Copolymere des Vinylpyrrolidons, Homo- und Copolymere der Acrylsäure und/oder der Methacrylsäure mit Hydroxylgruppen tragenden Monomeren, vinylaromatischen Monomeren, Olefinen und/oder (Meth)acrylsäureestern, Polyvinylalkohol und insbesondere Arylsulfonsäure-Formaldehyd-Kondensationsprodukte sowie Gemischen davon.

Ferner kann man der zu trocknenden Polymerisatdispersion während des Trocknungsvorganges ein übliches Anticaking-Mittel (Antibackmittel) wie ein feinteiliges anorganisches Oxid beispielsweise eine feinteilige Kieselsäure oder ein feinteiliges Silicat, z.B. Talkum zusetzen.

Die Herstellung der grobteiligen Zubereitung kann derart erfolgen, dass man die Mikrokapseln zusammen mit dem polymeren Bindemittel und Wasser in eine grobteilige Form bringt, beispielsweise granuliert oder extrudiert, und anschließend gegebenenfalls trocknet. Das Bindemittel kann dem Mikrokapselpulver zugesetzt werden. Nach einer weiteren Ausführungsform kann das Bindemittel bereits als Sprühhilfsmittel während der Sprühtrocknung der Mikrokapseln zugesetzt werden. Derartig bevorzugte Bindemittel sind die oben für die Sprühtrocknung der Mikrokapseln genannten. Sie werden üblicherweise in einer Menge von 1 bis 10 Gew.-% bezogen auf den Feststoffanteil der Mikrokapseldispersion zugesetzt. In diesen Fällen ist die Zugabe von weiterem Bindemittel möglich, in der Regel aber nicht notwendig.

Die Herstellung der Zubereitung kann nach den für Agglomeraten wie Pellets, Tabletten und Granulaten bekannten Methoden erfolgen.

Erfindungsgemäße Agglomerate sind erhältlich durch Bewegung des Mikrokapselpulvers zusammen mit dem Bindemittel in einer Trommel oder auf geeigneten Tellern, sogenannten Pelletierteltern. Bei der Trommelgranulierung wandern die Mikrokapseln kontinuierlich in axialer Richtung durch eine leicht geneigte, rotierende Trommel und werden dabei mit dem polymeren Bindemittel besprüht. Bei der Tellergranulierung werden die Mikrokapseln kontinuierlich über eine Dosiereinrichtung auf einen Pelletierteller aufgebracht, mit dem polymeren Bindemittel bedüst und laufen nach Erreichen einer bestimmten Granulatkorngröße über den Tellerrand. Die Trommel- und Tellergranulation eignet sich besonders für kontinuierlichen Betrieb und damit für großvolumige Produkte. Die Trocknung erfolgt mit Vorteil in einem kontinuierlichen Wirbelschicht- oder einem Trommeltrockner. Beim absatzweisen Verfahren kommt auch Vakuumtrocknung in Frage.

Ferner können Granulate in herkömmlichen Wirbelbettgranulatoren hergestellt werden. Dabei werden die Mikrokapselpulver, die durch einen aufwärts gerichteten Warmluftstrom in Schwebe gehalten werden, im Gleich- oder Gegenstrom mit der polymeren Bindemitteldispersion besprüht und getrocknet. Das heisst das polymere Bindemittel wird auf ein fluidisiertes Pulver aufgesprüht. Die Wirbelschichtgranulierung eignet sich gleichermaßen für den absatzweisen wie für den kontinuierlichen Betrieb. In einer Variante der Wirbelbettgranulierung können auch eine wässrige Mikrokapseldispersion und eine wässrige Bindemitteldispersion gemeinsam oder über zwei verschiedene Düsen in den Granulator verdüst und getrocknet werden. Diese Vorgehensweise hat den Vorteil, dass die Mikrokapseldispersion nicht extra vorgetrocknet werden muss, sondern zusammen mit der Bindemitteldispersion granuliert werden kann.

Weiterhin können Granulate durch Mischergranulierung hergestellt werden. Es werden Mischer eingesetzt, die mit starren oder rotierenden Einsätzen versehen sind (z. B. Diosna-Pharmamischer) und im Idealfall in einem Arbeitsgang mischen, granulieren und trocknen. Das Mikrokapselpulver wird unter Zugabe des polymeren Bindemittels und ggf. Wasser, durch die Umlagerungsbewegung zu Granulaten aufgebaut. Diese werden anschließend im Wirbelschicht-, Umluft-, oder Vakuumtrockner getrocknet und mittels Siebmaschinen oder Mühlen zerkleinert. Besonders schonend und staubfrei ist beispielsweise ein Vakuum-Rotationsmischtrockner.

Nach einer anderen Ausführungsform extrudiert man die Mikrokapseln zusammen mit dem polymeren Bindemittel.

Die Herstellung der grobteiligen Zubereitung erfolgt unter Zugabe von Wasser und dem polymeren Bindemittel. Dabei ist es möglich, das Wasser zu dem Mikrokapsel-und/oder Bindemittelpulver zuzudosieren. Nach einer bevorzugten Ausführungsform vermischt man das Mikrokapselpulver direkt mit einer Bindemitteldispersion des gewünschten Wassergehaltes. Der Wassergehalt beträgt 10- 40 Gew.-% bezogen auf das Gesamtgemisch. Ein niedrigerer Wassergehalt führt zu einer unvollständigen Durchmischung der beiden Komponenten und schlechter Formbarkeit. Höhere Wassergehalte sind prinzipiell möglich, oberhalb von 50 Gew.-% lässt sich die Masse nicht mehr extrudieren, sondern zerfließt. Bevorzugt ist ein Wassergehalt von 20 - 35 Gew.-% am Austragspunkt, da in diesem Bereich die erhaltenen Pellets bereits eine gute Festigkeit aufweisen.

Geeignet sind Extruder wie Ein- oder Zweischneckenextruder und die sogenannte Schmelzekalandrierung oder Schmelzetablettierung. Zweischneckenextruder arbeiten nach dem Prinzip eines Mischaggregats, das gleichzeitig vorwärts hin auf ein Düsenwerkzeug transportiert und verdichtet.

Nach einer bevorzugten Ausführungsform wird das Produkt in der Einzugszone gegen die Aufwärmzone verdichtet. In der Mittelzone des Extruders werden die Stoffe dispergiert und ggf. entgast. In der Endzone des Extruders wird das Gemisch unter Druck durch ein Düsenwerkzeug ausgebracht. Das Düsenwerkzeug kann je nach Wunsch aus einer oder mehreren Lochdüsen oder einer Flachdüse bestehen oder auch eine komplexere Form, beispielsweise rohrförmig, haben. Man extrudiert im Temperaturbereich der Glasübergangstemperatur des Bindemittelpolymers und bevorzugt unterhalb der Erweichungs- oder Zersetzungstemperatur der Mikrokapselwand. Das Bindemittelpolymer sollte unter den Verarbeitungsbedingungen einen Film bilden, d.h. es sollte zumindest teilweise aufschmelzen oder erweichen, ohne allerdings zu dünnflüssig zu werden, um die Mikrokapselzubereitung in Form zu bringen. Ein geeigneter Temperaturbereich ist der Bereich von 25 K unterhalb bis etwa 50 K oberhalb der Glasübergangstemperatur. Der Erweichungsbereich des Bindemittelpolymers kann allerdings durch Weichmacher- oder Lösungsmitteleffekte mitunter deutlich abgesenkt werden, so dass in Gegenwart dieser Substanzen auch eine Verarbeitung bis 50 K unterhalb der Glasübergangstemperatur möglich ist. Bei Einsatz flüchtiger Weichmacher ist es somit möglich, diese nach dem Formgebungsprozess zu entfernen, wodurch eine größere Festigkeit erreicht wird. Da Wasser für polare und die wasserlöslichen, filmbildenden Polymere ein Weichmacher ist, gilt die Betrachtung der Glasübergangstemperatur des reinen Polymers in diesen Fällen nicht.

Nach einer bevorzugten Variante betragen die Temperaturen im Extruder 40 bis 120°C. Dabei ist es möglich, dass eine konstante Temperatur vorherrscht. Ebenso ist es möglich, dass entlang der Transportrichtung der Mikrokapsel/Bindemittelmischung ein Temperaturgradient von 40 bis auf 120°C herrscht. Dabei sind bei dem Gradienten jegliche Abstufungen möglich von kontinuierlich bis stufenweise. Die Agglomerierung bei diesen Temperaturen hat den Vorteil, dass ein Teil des Wassers bereits während des Misch- und/oder Verdichtungsprozesses verdampft.

Sonstige Zusatzstoffe der grobteiligen Mikrokapselzubereitung können sein: Farbstoffe, Pigmente, Duftstoffe, Antistatika und Hydrophilierungsmittel.

Die erfindungsgemäßen Mikrokapselzubereitungen haben das Latentwärmespeichermaterial dicht eingeschlossen, so dass keine Emissionen an die Umgebungsluft nachweisbar sind. Dies ermöglicht ihren Einsatz nicht nur in geschlossenen Systeme, sondern darüber hinaus auch in offenen Systemen.

Die grobteiligen Mikrokapselzubereitungen eignen sich hervorragend zur Verwendung in Baustoffen sowie als Speichermaterial in Wärmetauschern. Sie zeigen eine gute Härte und sind abriebfest. Ihre grobteilige Struktur ermöglicht eine frei wählbare Speichergeometrie, beispielsweise Schüttungen für Fußbodenbeläge, chemischen Reaktoren oder Kolonnen, sowie in durchströmten Anwendungen wie Wärmetauschern in Solaranlagen, Heizungen insbesondere Warmluftheizungen und zentraler und dezentraler Lüftung.

Aufgrund der günstigen Verhältnisse von Oberfläche zu Zwischenräumen der Teilchen untereinander ist eine große Wärmeübertragung möglich, die durch die gute Durchströmbarkeit eines beliebigen Trägermaterials wie Luft oder Wasser schnell abgeführt werden kann. Bezogen auf das Volumen der Zubereitung zeigen die grobteiligen Mikrokapseln eine sehr hohe Speicherkapazität und weisen damit einen sehr hohen Wirkungsgrad auf. Damit haben sie bei gleicher Speicherleistung im Vergleich zu herkömmlichen Wärmespeichern einen geringen Platzbedarf wie auch ein niedrigeres Speichergewicht.

Die erfindungsgemäßen grobteiligen Mikrokapselzubereitungen können darüber hinaus vorteilhaft zusammen mit mineralischen oder silikatischen Bindebaustoffen verarbeitet werden. Geeignete mineralische Bindemittel sind allgemein bekannt. Es handelt sich um feinteilige anorganische Stoffe wie Kalk, Gips, Ton, Lehm und Zement, die durch Anrühren mit Wasser in ihre gebrauchsfertige Form überführt werden und sich beim Trocknen als Funktion der Zeit, gegebenenfalls unter erhöhter Temperatur verfestigen. Die erfindungsgemäßen grobteiligen Mikrokapselzubereitungen werden zusammen mit dem mineralischen Bindemittel, Wasser, Zuschlägen wie Kies, Sand, Glas oder Mineralfasern sowie gegebenenfalls Hilfsmittel in den gebrauchsfertigen Formkörper überführt.

Die nachfolgenden Beispiele sollen die Erfindung näher erläutern.

Es wurde ein Mikrokapselpulver verwendet wie es gemäß Beispiel 1 der DE 101 63 162 und anschließender Sprühtrocknung erhalten wird. Die Mikrokapseln hatten einen mittleren Durchmesser von 7,8 µm.

### Beispiel 1 (nicht erfindungsgemäß)

1900 g des oben beschriebenen Mikrokapselpulvers wurden in einen Diosna-Mischer Typ V 50 unter Rühren langsam mit 1963 g 30 gew.-%iger Polyvinylacetatdispersion (Kollicoat SR 30 D) versetzt. Die befeuchtete Masse wurde 6 min unter Zuschaltung des Zerhackers (Stufe 1) durchmischt, so dass die Flüssigkeitsmenge gleichmäßig verteilt vorlag. Diese Masse wurde sodann in einem Alexanderwerk Laborgranulator Typ RSA mit vertikalem Sieb der Maschenweite 3,0 mm extrudiert. Die Trocknung der feuchten Extrudate erfolgte in einem Retsch-Wirbelschichttrockner Typ TG 100 bei einer Zulufttemperatur von 30°C. Es wurden trockene Extrudate mit einem Durchmesser von ca. 3 mm und einer Länge von 5 mm erhalten, die hart und abriebstabil waren.
Anteil Bindemittel im Granulat: 24 Gew.-%
Anteil Paraffin (Latentwärmespeichermaterial) im Granulat: 66 Gew.-%

### Abriebtest

Der Abrieb (Friabilität) ist definiert als Massenverlust bei einer bestimmten mechanischen Belastung und wird daher in Prozent der Ausgangsmasse angegeben. Zur Bestimmung des Abriebs (Friabilität) wird eine Anzahl entstaubter Extrudate gewogen und eine bestimmte Zeit einer definierten Fall-, Roll-, Rutsch- und Schüttelbelastung ausgesetzt. Nach dem Entstauben werden die Extrudate gewogen und der Masseverlust in Prozent berechnet.

### Bestimmung des Abriebs im Friabilator Typ TAR-20 (Fa. Erweka):

Die Mikrokapselgranulate wurden eingewogen und mit 25 U/min in der Trommel rotiert.

Die Prüfdauer betrug 4 min. Der abgeriebene Staub wurde durch ein grobmaschiges

Sieb abgetrennt, die Restmasse der Granulate gewogen und der Masseverlust in Prozent berechnet. Der Abrieb des Produktes von Beispiel 1 betrug 0,4%.

### Beispiel 2 (nicht erfindungsgemäß)

2940 g des oben beschriebenen Mikrokapselpulvers wurden in einen Diosna-Mischer Typ V 50 unter Rühren langsam mit 1779 g 20 gew.%iger wässriger Lösung von Polyethylenglykol-Polyvinylalkohol (25:75) Pfropfcopolymer (Kollicoat IR) versetzt. Die befeuchtete Masse wurde 8 min unter Zuschaltung des Zerhackers (Stufe 1) durchmischt, so dass die Flüssigkeitsmenge gleichmäßig verteilt vorlag. Diese Masse wurde sodann in einem Alexanderwerk Laborgranulator Typ RSA mit vertikalem Sieb der Maschenweite 3,0 mm extrudiert. Die Trocknung der feuchten Extrudate erfolgte in einem Retsch-Wirbelschichttrockner Typ TG 100 bei einer Zulufttemperatur von 40°C. Es wurden trockene Extrudate mit einem Durchmesser von ca. 3 mm und einer Länge von 4mm erhalten, die hart und abriebstabil waren.

### Beispiel 3 (nicht erfindungsgemäß)

### (Polyvinylacetat-Dispersion als Bindemittel)

3367 g des oben beschriebenen Mikrokapselpulvers (Schmp. 28 °C) wurden mit 2978 g Kollicoat SR 30 D zu einer feuchten Paste verarbeitet und unter Verwendung eines Rotorfeingranulators der Fa. Alexanderwerk granuliert. Die erzeugten Granulate wurden in der Wirbelschicht (40 °C, 1 h) getrocknet.
Anteil Bindemittel im Granulat: 21 %
Anteil Paraffin im Granulat: 69 %

### Beispiel 4

Maschine: Dichtkämmender Gleichdralldoppelschneckenextruder Typ FTS16mm, Austragsdüse 1-3 mm, 5 Heizzonen von der Eintragsöffnung bis zur Austragsdüse, Zone 1 bis 4 auf 75°C geheizt, Zone 5 auf 85°C beheizt. Die verwendete Extruderschnecke besteht bis auf ein Element (Rückförderelement) etwa in der Mitte aus herkömmlichen Förderelementen mit denen ein Einmischen durch ein starkes Scherfeld im Zwickelbereich gewährleistet wird. Der Gesamtdurchsatz beträgt 775 g/h, die Schneckendrehzahl 150 Upm. Der Druckaufbau in der Schnecke sorgt für ein kontinuierliches Austragen des benetzten Latentwärmespeicherpulvers.

### Materialien:

A) sprühgetrocknetes PMMA-Mikrokapselpulver gemäß DE 197 49 731 mit einem Kern aus n-Octadecan, bestehend aus 87 Gew.-% Kern, 10 Gew.-% vernetzter PMMA-Wand (PMMA = Polymethylmethacrylat) und 3 % Dispergiermittel Polyvinylalkohol.
B) 55 gew.-%ige, wässrige Polymerdispersion eines Polymeren aus 88 Gew.-% Styrol, 10 Gew.% Acrylnitril und 2 Gew.-% Acrylsäure, zahlenmittleres Molekulargewicht Mₙ: 8000, volumenmittieres Molekulargewicht M_{w}:45 000, Glasübergangstemperatur Tg: 105°C.

In einem Gefäß wurden 92 g der Dispersion B), 183 g Wasser und 500 g Mikrokapselpulver A) gemischt und in den Einfülltrichter des Extruders gegeben. Diese Materialmenge wird im Laufe von einer Stunde komplett eingezogen und verarbeitet. Die Kopftemperatur des Extruders erreicht nach einigen Minuten 91°C. Mit dieser Temperatur wird das Material homogen und gleichmäßig aus der Düse gefördert und durch einen wasserfreien Trockenabschlag in Granulatform von ca. 3 mm Breite und 5 mm Länge erhalten. Der theoretische Bindemittelanteil im Granulat beträgt 9,2 Gew.-%; der Paraffinanteil im Endprodukt beträgt 79 %. Das Granulat wurde anschließend im Warmluftstrom getrocknet. Das Granulat lässt sich mit gewissem Kraftaufwand mit den Fingern zerbrechen, ist aber bei Schütteln des Granulats stabil. Das Granulat ist auch nach mehrtägiger Lagerung unter Wasser stabil ohne Auflösungserscheinungen.

### Beispiel 5 (nicht erfindungsgemäß)

Mit dem Extruder-Versuchsaufbau gemäß Beispiel 4 wurde folgendes Material verarbeitet:
A) PMMA-Mikrokapselpulver, das erhalten wurde, indem eine Mikrokapseldispersion gemäß DE 101 63 162, Beispiel 1 mit einem Kern aus n-Octadecan hergestellt wurde und anschließend wie folgt sprühgetrocknet wurde. Der Mikrokapseldispersion wurde eine 10 gew.-%ige wässrige Lösung aus Polyvinylalkohol (79% verseift, mittleres Molekulargewicht 90.000) und Methylhydroxypropylcellulose (Viskosität 100 mPas bei 2% in Wasser) im Verhältnis 1:1 zugesetzt. Die Sprühhilfsmittelmenge wurde dabei so gewählt, dass 1,5 Gew.-% Polyvinylalkohol und 1,5 Gew.-% Methylhydroxypropylcellulose, jeweils bezogen auf 100 Gew.-% Mikrokapseln, eingesetzt werden. Diese Formulierung wurde sprühgetrocknet.

Für die nachfolgend beschriebenen Extrusionsversuche wurde kein weiteres Bindemittel zugesetzt.

In einem Gefäß wurden 230 g Wasser und 500 g Mikrokapselpulver A) gemischt und in den Einfülltrichter des Extruders gegeben. Diese Materialmenge wurde im Laufe von einer Stunde komplett eingezogen und verarbeitet. Die Kopftemperatur des Extruders erreichte nach einigen Minuten 91 °C. Mit dieser Temperatur wurde das Material homogen und gleichmäßig aus der Düse gefördert und durch einen wasserfreien Trockenabschlag in Granulatform von ca. 3 mm Breite und 5 mm Länge erhalten. Das Granulat wurde anschließend im Warmluftstrom getrocknet. Das Granulat ließ sich mit gewissem Kraftaufwand mit den Fingern zerbrechen, war aber bei Schütteln des Granulats stabil. Das Granulat war auch nach mehrtägiger Lagerung unter Wasser stabil ohne Auflösungserscheinungen. Das Ergebnis belegt, dass das zugesetzte Sprühhilfsmittel als Bindemittel wirkt.

### Beispiel 6

In einem Gefäß wurden 2 g der Dispersion B) aus Beispiel 4, 6 g Wasser und 9 g Mikrokapselpulver A) aus Beispiel 1 mit einem Holzspatel zu einer pastösen Masse angerührt (Bindemittelgehalt ca. 10,9 Gew.-%). Diese Masse wurde in eine 100 ml Kunststoffspritze gefüllt und einige etwa 2 mm breite Stränge auf ein Silikonpapier abgelegt. Diese Stränge wurden 3 Stunden bei 60°C im Umlufttrockenschrank getrocknet und anschließend eine Stunde bei 120°C getempert. Die Stränge waren fest und brachen nur unter Kraftaufwand. Anschließend wurden die Stränge zu etwa 5 mm langen Stücken gebrochen. Das entstandene Granulat zeigte nach 24 Stunden Wasserlagerung keine Trübung des Wassers.

Analog wurde ein Versuch mit nur 1 g der Dispersion B) aus Beispiel 4 durchgeführt (Bindemittelgehalt ca. 5,8 Gew.-%). Die Stränge waren etwas leichter zu zerbrechen, waren aber noch so fest, dass sie bei Schütteln in einer Glasflasche nicht von selbst zerbrachen. Nach 24 Stunden Wasserlagerung war der Zusammenhalt der Granulate noch gegeben und das Wasser kaum getrübt.

## Patentansprüche

1. Grobteilige Mikrokapsetzubereitung mit Teilchen, deren Teilchengrößen im Bereich von 200 µm bis 5 cm liegen, enthaltend Mikrokapseln mit einem Kapselkern aus Latentwärmespeichermaterial und einem duroplastischen Polymer als Kapselwand und ein oder mehrere polymere Bindemittel, deren Bindemittelpolymer eine Glasübergangstemperatur von -60 bis +150 °C und thermoplastische und unter Verarbeitungsbedingungen filmbildende Eigenschaften hat und aus einem oder mehreren ethylenisch ungesättigten Monomeren M durch wässrige Emulsionspolymerisation aufgebaut wird, wobei der Bindemittelgehalt gerechnet als Feststoff 1- 30 Gew.-% bezogen auf das Gesamtgewicht der grobteiligen Mikrokapselzubereitung beträgt.

2. Grobteilige Mikrokapselzubereitung nach Anspruch 1, **dadurch gekennzeichnet, dass** 90 Gew.-% der Teilchen größer als 500 µm sind.

3. Grobteilige Mikrokapselzubereitung nach Anspruch 1 oder 2, **dadurch gekennzeichnet, dass** der Bindemittelgehalt gerechnet als Feststoff 1 - 25 Gew.-% bezogen auf das Gesamtgewicht der grobteiligen Mikrokapselzubereitung beträgt.

4. Grobteilige Mikrokapselzubereitung nach einem der Ansprüche 1 bis 3, **dadurch gekennzeichnet, dass** das Latentwärmespeichermaterial eine lipophile Substanz mit einem fest/flüssig Phasenübergang im Temperaturbereich von -20 bis 120°C ist.

5. Grobteilige Mikrokapselzubereitung nach einem der Ansprüche 1 bis 4, **dadurch gekennzeichnet, dass** das Latentwärmespeichermaterial eine aliphatische Kohlenwasserstoffverbindung ist.

6. Grobteilige Mikrokapselzubereitung nach einem der Ansprüche 1 bis 5, **dadurch gekennzeichnet, dass** die Kapselwand ein duroplastisches Polymer ausgewählt unter hochvernetzten Formaldehydharzen, hochvernetzten Polyhamstoffen und hochvernetzten Polyurethanen sowie hochvernetzten Acryl- und Methacrylsäureesterpolymeren ist.

7. Grobteilige Mikrokapselzubereitung nach einem der Ansprüche 1 bis 6, **dadurch gekennzeichnet, dass** die Kapselwand aufgebaut ist aus
| | |
|---|---|
| 10 bis 100 Gew.-% | eines oder mehrerer C₁-C₂₄-Alkylester der Acryl- und/oder Methacrylsäre (Monomere I). |
| 0 bis 80 Gew.-% | eines bi- oder polyfunktionellen Monomers (Monomere II), welches in Wasser nicht löslich oder schwer löslich ist und |
| 0 bis 90 Gew.-% | sonstige Monomere (Monomer III) |
jeweils bezogen auf das Gesamtgewicht der Monomere.

8. Grobteilige Mikrokapselzubereitung nach einem der Ansprüche 1 bis 7, **dadurch gekennzeichnet, dass** die Kapselwand aufgebaut ist aus
| | |
|---|---|
| 10 bis 95 Gew.-% | eines oder mehrerer C₁-C₂₄-Alkylester der Acryl- und/oder Methacrylsäure (Monomere I), |
| 5 bis 80 Gew.-% | eines bi- oder polyfunktionellen Monomers (Monomere II),welches in Wasser nicht löslich oder schwer löslich ist und |
| 0 bis 50 Gew.-% | sonstige Monomere (Monomer III) |
jeweils bezogen auf das Gesamtgewicht der Monomere.

9. Grobteilige Mikrokapselzubereitung nach einem der Ansprüche 1 bis 8, deren Bindemittelpolymer aufgebaut ist aus wenigstens 80 Gew.-% ethylenisch ungesättigten Monomeren A ausgewählt unter Monomeren mit einer Wasserlöslichkein < 10 g/l bei 25°C und 1 bar, deren Mischungen mit Acrylnitril und/oder Methacrylnitril.

10. Grobteilige Mikrokapselzubereitung nach einem der Ansprüche 1 bis 9 **dadurch gekennzeichnet, dass** das Bindemittelpolymer ein Homopolymerisat von Vinylestem aliphatischer Carbonsäuren oder ein Copolymerisat von Vinylestern aliphatischer Carbonsäuren mit Olefinen und/oder Alkyl(meth)acrylaten ist.

11. Grobteilige Mikrokapselzubereitung nach einem der Ansprüche 1 bis 9, **dadurch gekennzeichnet, dass** das Bindemittelpolymer ein Copolymerisat von Styrol mit Acrytnitril ist.

12. Verfahren zur Herstellung grobteiliger Mikrokapselzubereitungen nach Anspruch 1, **dadurch gekennzeichnet, dass** man die Mikrokapseln zusammen mit dem polymeren Bindemittel und Wasser in eine grobteilige Form bringt und anschließend gegebenenfalls trocknet.

13. Verfahren zur Herstellung von grobteiligen Mikrokapselzubereitungen nach Anspruch 1, **dadurch gekennzeichnet, dass** man die Mikrokapseln zusammen mit der polymeren Bindemitteldispersion bei Temperaturen im Bereich 25 K unterhalb bis 50 K oberhalb der Glasübergangstemperatur des Bindemittelpolymers extrudiert und anschließend gegebenenfalls trocknet.

14. Verfahren zur Herstellung von grobteiligen Mikrokapselzubereitungen nach Anspruch 13, **dadurch gekennzeichnet, dass** man bei Temperaturen im Bereich von 60 bis 110°C extrudiert.

15. Verwendung der grobteiligen Mikrokapselzubereitung gemäß Anspruch 1 in Wärmetauschern.

16. Verwendung der grobteiligen Mikrokapselzubereitung gemäß Anspruch 1 in Baustoffen.

## Claims

1. A coarsely divided microcapsule preparation with particles whose particle sizes are in the range from 200 µm to 5 cm, comprising microcapsules with a capsule core of latent heat storage material and a thermosetting polymer as capsule wall and one or more polymeric binders whose binder polymer has a glass transition temperature of from -60 to +150°C and thermoplastic properties and film-forming properties under processing conditions and is constructed from one or more ethylenically unsaturated monomers M by aqueous emulsion polymerization, where the binder content, calculated as solid, is 1-30% by weight, based on the total weight of the coarsely divided microcapsule preparation.

2. The coarsely divided microcapsule preparation according to claim 1, wherein 90% by weight of the particles are greater than 500 µm.

3. The coarsely divided microcapsule preparation according to claim 1 or 2, wherein the binder content calculated as solid is 1-25% by weight based on the total weight of the coarsely divided microcapsule preparation.

4. The coarsely divided microcapsule preparation according to one of claims 1 to 3, wherein the latent heat storage material is a lipophilic substance with a solid/liquid phase transition in the temperature range from -20 to 120°C.

5. The coarsely divided microcapsule preparation according to one of claims 1 to 4, wherein the latent heat storage material is an aliphatic hydrocarbon compound.

6. The coarsely divided microcapsule preparation according to one of claims 1 to 5, wherein the capsule wall is a thermosetting polymer chosen from highly crosslinked formaldehyde resins, highly crosslinked polyureas and highly crosslinked polyurethanes and highly crosslinked acrylic and methacrylic ester polymers.

7. The coarsely divided microcapsule preparation according to one of claims 1 to 6, wherein the capsule wall is constructed from
| | |
|---|---|
| 10 to 100% by weight | of one or more C₁-C₂₄-alkyl esters of acrylic and/or methacrylic acid (monomers I), |
| 0 to 80% by weight | of a bi- or polyfunctional monomer (monomers II) which is insoluble or sparingly soluble in water and |
| 0 to 90% by weight | of other monomers (monomer III) |
in each case based on the total weight of the monomers.

8. The coarsely divided microcapsule preparation according to one of claims 1 to 7, wherein the capsule wall is constructed from
| | |
|---|---|
| 10 to 95% by weight | of one or more C₁-C₂₄-alkyl esters of acrylic and/or methacrylic acid (monomers I), |
| 5 to 80% by weight | of a bi- or polyfunctional monomer (monomers II) which is insoluble or sparingly soluble in water and |
| 0 to 50% by weight | of other monomers (monomer III) |
in each case based on the total weight of the monomers.

9. The coarsely divided microcapsule preparation according to one of claims 1 to 8, whose binder polymer is constructed from at least 80% by weight of ethylenically unsaturated monomers A chosen from monomers with a solubility in water of < 10 g/l at 25°C and 1 bar, mixtures thereof with acrylonitrile and/or methacrylonitrile.

10. The coarsely divided microcapsule preparation according to one of claims 1 to 9, wherein the binder polymer is a homopolymer of vinyl esters of aliphatic carboxylic acids or a copolymer of vinyl esters of aliphatic carboxylic acids with olefins and/or alkyl (meth)acrylates.

11. The coarsely divided microcapsule preparation according to one of claims 1 to 9, wherein the binder polymer is a copolymer of styrene with acrylonitrile.

12. A method of producing coarsely divided microcapsule preparations according to claim 1, wherein the microcapsules, together with the polymeric binder and water, are converted to a coarsely divided form and then optionally dried.

13. A method of producing coarsely divided microcapsule preparations according to claim 1, wherein the microcapsules, together with the polymeric binder dispersion, are extruded at temperatures in the range 25 K below to 50 K above the glass transition temperature of the binder polymer and then optionally dried.

14. The method of producing coarsely divided microcapsule preparations according to claim 13, wherein the extrusion is carried out at temperatures in the range from 60 to 110°C.

15. The use of the coarsely divided microcapsule preparation as in claim 1 in heat exchangers.

16. The use of the coarsely divided microcapsule preparation as in claim 1 in building materials.

## Revendications

1. Préparation de microcapsules à grosses particules comprenant des particules dont les tailles de particules se trouvent dans la plage allant de 200 µm à 5 cm, contenant des microcapsules qui comprennent un noyau de capsule en un matériau de stockage de la chaleur latent et un polymère duroplastique en tant que paroi de capsule et un ou plusieurs liants polymères, dont le polymère liant présente une température de transition vitreuse de -60 à +150 °C et des propriétés thermoplastiques et filmogènes dans des conditions d'usinage, et est formé à partir d'un ou de plusieurs monomères éthyléniquement insaturés M par polymérisation en émulsion aqueuse, la teneur en liant calculée sous forme solide étant de 1 à 30 % en poids par rapport au poids total de la préparation de microcapsules à grosses particules.

2. Préparation de microcapsules à grosses particules selon la revendication 1, **caractérisée en ce que** 90 % en poids des particules sont supérieures à 500 µm.

3. Préparation de microcapsules à grosses particules selon la revendication 1 ou 2, **caractérisée en ce que** la teneur en liant calculée sous forme solide est de 1 à 25 % en poids par rapport au poids total de la préparation de microcapsules à grosses particules.

4. Préparation de microcapsules à grosses particules selon l'une quelconque des revendications 1 à 3, **caractérisée en ce que** le matériau de stockage de la chaleur latent est une substance lipophile présentant une transition de phase solide/liquide dans la plage de température allant de -20 à 120 °C.

5. Préparation de microcapsules à grosses particules selon l'une quelconque des revendications 1 à 4, **caractérisée en ce que** le matériau de stockage de la chaleur latent est un composé hydrocarboné aliphatique.

6. Préparation de microcapsules à grosses particules selon l'une quelconque des revendications 1 à 5, **caractérisée en ce que** la paroi de capsule est un polymère duroplastique choisi parmi les résines de formaldéhyde hautement réticulées, les polyurées hautement réticulées et les polyuréthanes hautement réticulés, ainsi que les polymères d'esters de l'acide acrylique et méthacrylique hautement réticulés.

7. Préparation de microcapsules à grosses particules selon l'une quelconque des revendications 1 à 6, **caractérisée en ce que** la paroi de capsule est formée à partir de
| | |
|---|---|
| 10 à 100 % en poids | d'un ou de plusieurs esters d'alkyle en C₁-C₂₄ de l'acide acrylique et/ou méthacrylique (monomères I), |
| 0 à 80 % en poids | d'un monomère bi- ou polyfonctionnel (monomères II) qui n'est pas soluble ou qui est difficilement soluble dans l'eau, et |
| 0 à 90 % en poids | d'autres monomères (monomère III), |
à chaque fois par rapport au poids total des monomères.

8. Préparation de microcapsules à grosses particules selon l'une quelconque des revendications 1 à 7, **caractérisée en ce que** la paroi de capsule est formée à partir de
| | |
|---|---|
| 10 à 95 % en poids | d'un ou de plusieurs esters d'alkyle en C₁-C₂₄ de l'acide acrylique et/ou méthacrylique (monomères I), |
| 5 à 80 % en poids | d'un monomère bi- ou polyfonctionnel (monomères II) qui n'est pas soluble ou qui est difficilement soluble dans l'eau, et |
| 0 à 50 % en poids | d'autres monomères (monomère III), |
à chaque fois par rapport au poids total des monomères.

9. Préparation de microcapsules à grosses particules selon l'une quelconque des revendications 1 à 8, dont le polymère liant est formé à partir d'au moins 80 % en poids de monomères éthyléniquement insaturés A choisis parmi les monomères ayant une solubilité dans l'eau < 10 g/l à 25 °C et 1 bar, leurs mélanges avec l'acrylonitrile et/ou le méthacrylonitrile.

10. Préparation de microcapsules à grosses particules selon l'une quelconque des revendications 1 à 9, **caractérisée en ce que** le polymère liant est un homopolymère d'esters de vinyle d'acides carboxyliques aliphatiques ou un copolymère d'esters de vinyle d'acides carboxyliques aliphatiques avec des oléfines et/ou des (méth)acrylates d'alkyle.

11. Préparation de microcapsules à grosses particules selon l'une quelconque des revendications 1 à 9, **caractérisée en ce que** le polymère liant est un copolymère de styrène avec de l'acrylonitrile.

12. Procédé de fabrication de préparations de microcapsules à grosses particules selon la revendication 1, **caractérisé en ce que** les microcapsules sont mises sous une forme à grosses particules avec le liant polymère et de l'eau, puis éventuellement séchées.

13. Procédé de fabrication de préparations de microcapsules à grosses particules selon la revendication 1, **caractérisé en ce que** les microcapsules sont extrudées avec la dispersion de liant polymère à des températures dans la plage allant de 25 K en dessous à 50 K au-dessus de la température de transition vitreuse du polymère liant, puis éventuellement séchées.

14. Procédé de fabrication de préparations de microcapsules à grosses particules selon la revendication 13, **caractérisé en ce que** l'extrusion est réalisée à des températures dans la plage allant de 60 à 110 °C.

15. Utilisation de la préparation de microcapsules à grosses particules selon la revendication 1 dans des échangeurs de chaleur.

16. Utilisation de la préparation de microcapsules à grosses particules selon la revendication 1 dans des matériaux de construction.
